# EUROPEAN PATENT APPLICATION

(11) **EP 4 826 773 A1**
(43) Date of publication of application: **21.10.2026**
(21) Application number: 24904253.2
(22) Date of filing: 10.12.2024
(51) Int. Cl.: H01M 4/134, H01M 4/66, H01M 4/1395, H01M 4/04, H01M 4/38, H01M 4/40, H01M 10/42, H01M 10/052, H01M 4/02

(54) **LITHIUM METAL ELECTRODE FOR LITHIUM SECONDARY BATTERY AND METHOD OF MANUFACTURING SAME**

(30) Priority: 15.12.2023 KR 20230183825
(71) Applicant: POSCO Holdings Inc., Pohang-si, Gyeongsangbuk-do 37859 (KR)
(72) Inventor: LEE, Garam, Pohang-si, Gyeongsangbuk-do 37859 (KR); KIM, Jin Hong, Pohang-si, Gyeongsangbuk-do 37859 (KR); BAE, Hongyeul, Pohang-si, Gyeongsangbuk-do 37859 (KR); BAE, Weon Soo, Pohang-si, Gyeongsangbuk-do 37859 (KR); LEE, Sang Lag, Pohang-si, Gyeongsangbuk-do 37859 (KR)
(74) Representative: Pfenning, Meinig & Partner mbB
(86) International application number: PCT/KR2024/020218
(87) International publication number: WO 2025/127688

(57) **Abstract**

The present invention relates to a lithium metal electrode and a method for manufacturing the same. The lithium metal electrode of the present invention includes a current collector including Fe and Ni, and a metal layer positioned on at least one surface of the current collector and including a lithium alloy.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the cost and increase the energy density of secondary batteries, it has become essential to use a lithium metal electrode as a negative electrode of a lithium secondary battery. Specifically, all-solid-state batteries have recently attracted attention as next-generation batteries for high energy density applications such as electric vehicles (EVs).

Since all-solid-state batteries do not use a liquid electrolyte, they have advantages in various aspects, such as excellent stability, high-voltage operation, improved energy density of a battery pack due to reduction of cooling- and safety-related auxiliary materials, and operability over a wide temperature range. In order to substantially realize high energy density in such an all-solid-state battery, a thick graphite-based negative electrode material having low capacity should be replaced with lithium, which is thin and has high capacity, and, in view of economic feasibility and energy density, a thin-film lithium metal electrode having a thickness of substantially 10 µm to 20 µm is required.

In general, in the case of a lithium metal electrode, Cu is widely used as a current collector. However, in a sulfide-based all-solid-state battery, Cu is corroded, and thus there is a problem in that application as a current collector is difficult. In order to solve this problem, interest has increased in methods using Ni or STS for a current collector. However, although Ni has better corrosion resistance than Cu, it still has a corrosion problem. STS has excellent corrosion resistance, but in order to be applied to a current collector, there is no economic feasibility in the process for making it have a thickness of 20 µm or less, and there is a problem in that surface treatment is difficult.

Accordingly, research is required on a lithium metal electrode that can replace an existing current collector and that includes a current collector resistant to corrosion and has excellent stability and lifespan characteristics.

### [DETAILED DESCRIPTION OF THE INVENTION]

### [Technical Problem]

A lithium metal electrode for a lithium secondary battery according to an embodiment of the present invention is intended to provide a lithium metal battery which is resistant to corrosion and has excellent lifespan characteristics.

A method for manufacturing a lithium metal electrode for a lithium secondary battery according to another embodiment of the present invention is intended to provide a method for manufacturing a lithium metal electrode for a lithium secondary battery having the above-described advantages.

### [Technical Solution]

A lithium metal electrode according to an embodiment of the present invention may include a current collector including Fe and Ni, and a metal layer positioned on at least one surface of the current collector and including a lithium alloy. In an embodiment, the lithium metal electrode may include a protective layer positioned on the metal layer.

In an embodiment, the current collector including Fe and Ni may include, based on 100 wt% of an alloy in the current collector, 10 wt% to 90 wt% of Fe and the balance of Ni. In an embodiment, the current collector including Fe and Ni may include, based on 100 wt% of the alloy in the current collector, 55 wt% to 70 wt% of Fe and the balance of Ni.

In an embodiment, the metal layer may include at least one lithiophilic metal among gold (Au), silver (Ag), platinum (Pt), zinc (Zn), silicon (Si), magnesium (Mg), and tin (Sn). In an embodiment, a thickness of the metal layer including the lithiophilic metal may be 20 nm to 300 nm.

In an embodiment, a thickness standard deviation of the metal layer including the lithiophilic metal may be 90 nm or less. In an embodiment, a molar ratio of the lithiophilic metal in the metal layer including the lithium alloy may increase toward the current collector.

A method for manufacturing a lithium metal electrode according to another embodiment of the present invention may include preparing a current collector including Fe and Ni, and forming a coating layer on at least one surface of the current collector using a coating composition including a lithiophilic component. In an embodiment, after the step of forming the coating layer, the method may include forming a protective layer on a surface of the coating layer, placing the current collector on which the coating layer and the protective layer are formed in a plating solution and then placing a lithium supply source at a predetermined distance from the protective layer, and applying a current between the current collector and the lithium supply source to form a metal layer including a lithium alloy in which the lithiophilic component included in the coating layer and lithium precipitated from the lithium supply source are alloyed.

In an embodiment, the step of preparing the current collector including Fe and Ni may include, based on 100 wt% of an alloy in the current collector, 10 wt% to 90 wt% of Fe and the balance of Ni. In an embodiment, the current collector including Fe and Ni may include, based on 100 wt% of the alloy in the current collector, 55 wt% to 70 wt% of Fe and the balance of Ni.

In an embodiment, the step of forming the coating layer on at least one surface of the current collector using the coating composition including the lithiophilic component may control a thickness of the coating layer to a range of 20 nm to 300 nm. In an embodiment, the step of forming the coating layer on at least one surface of the current collector using the coating composition including the lithiophilic component may control a thickness standard deviation of the coating layer to 10 nm to 90 nm.

In an embodiment, in the step of forming the coating layer on at least one surface of the current collector using the coating composition including the lithiophilic component, the coating layer may include at least one lithiophilic metal among gold (Au), silver (Ag), platinum (Pt), zinc (Zn), silicon (Si), magnesium (Mg), and tin (Sn).

### [Advantageous Effects]

A lithium metal electrode for a lithium secondary battery according to an embodiment of the present invention is intended to provide a lithium metal battery which is resistant to corrosion and has excellent lifespan characteristics by including an alloy layer including Fe and Ni in a current collector.

A method for manufacturing a lithium metal electrode for a lithium secondary battery according to another embodiment of the present invention is intended to provide a method for manufacturing a lithium metal electrode for a lithium secondary battery having the above-described advantages.

### [BRIEF DESCRIPTION OF THE DRAWINGS]

FIGS. 1A and 1B show lithium metal electrodes manufactured according to an embodiment.
FIG. 2 is a schematic view of a method for manufacturing a lithium metal electrode of the present invention.
FIG. 3 is a scanning electron microscope (SEM) photograph showing a structure and thickness of an alloy material coating layer plated on a current collector according to an embodiment of the present invention.
FIG. 4 shows a cross-sectional structure when lithium is precipitated between a protective layer and a current collector by an electrodeposition process according to an embodiment.
FIGS. 5A and 5B show appearances when lithium is electrodeposited according to Examples and Comparative Examples of the present invention.
FIG. 6 is a photograph showing evaluation of corrosiveness of lithium metal batteries according to Examples and Comparative Examples of the present invention.
FIG. 7 shows cell lifespan evaluation of all-solid-state batteries using Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

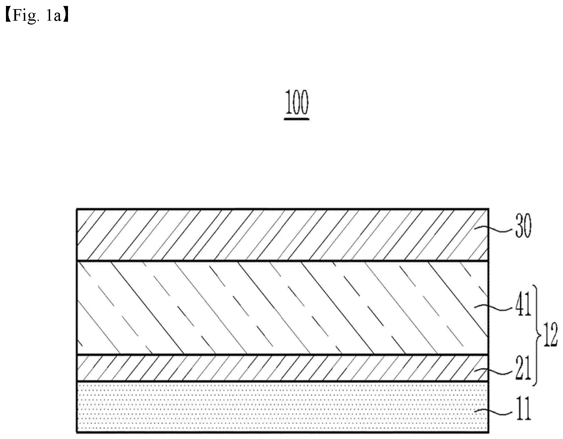

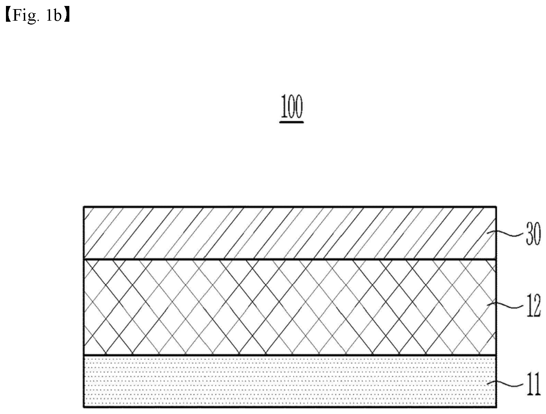

FIGS. 1A and 1B show a lithium metal electrode 100 manufactured according to an embodiment.

Referring to FIG. 1A, the lithium metal electrode 100 according to an embodiment includes a current collector 11 and a metal layer 12 positioned on at least one surface of the current collector 11, and further includes a protective layer 30 positioned on another surface of the metal layer 12 facing the current collector 11.

The current collector 11 may be a member for electrical connection in a lithium secondary battery. The current collector 11 may have a form of a foil, but is not limited thereto, and may have, for example, a form of a mesh, a foam, a rod, a wire, or a sheet woven from wires or fibers.

As the current collector 11, a material having electrical conductivity and having limited reactivity with lithium may be used. Specifically, the material of the current collector 11 may be, for example, one of copper, nickel, titanium, stainless steel, iron, gold, platinum, silver, tantalum, ruthenium, and alloys thereof, carbon, a conductive polymer, and a composite fiber in which a conductive layer is coated on a non-conductive polymer, or a combination thereof.

In an embodiment, the current collector 11 may have a thickness of 1 µm to 50 µm. When the current collector 11 is excessively thick, there is a problem in that the weight of the battery increases and energy density of the battery decreases. When the current collector 11 is excessively thin, there is a risk of overheating damage during high-current operation, and the current collector may be damaged by tension during a battery manufacturing process.

In an embodiment, the current collector 11 may include Fe and Ni. Specifically, the current collector 11 may include an alloy including Fe and Ni. Since the current collector 11 includes Fe and Ni, there are advantages in that the thermal expansion coefficient is low and thus advantageous for battery application, corrosion resistance is excellent, and, at the same time, surface treatment is easy, thereby being advantageous for application to an all-solid-state battery.

In an embodiment, the current collector 11 may include, based on 100 wt% of an alloy in the current collector 11, 10 wt% to 90 wt% of Fe and the balance of Ni. Fe and Ni in the current collector 11 satisfy the above-described ranges and have the following advantages.

### Fe: 10 wt% to 90 wt%

Since Fe is included in an appropriate amount in the current collector 11, there are advantages of increased corrosion resistance and economic feasibility. Fe may be included in an amount of 10 wt% to 90 wt% based on 100 wt% of the current collector 11. Specifically, Fe may be included in an amount of 55 wt% to 70 wt%, and more specifically 60 wt% to 70 wt%, based on 100 wt% of the current collector 11.

When the Fe content is outside the upper limit or the lower limit of the above-described range, there is a problem in that reactivity with an electrolyte rather increases as compared with a value within an appropriate range.

### Ni: 10 wt% to 90 wt%

Since Ni is included in the current collector 11, there is an advantage in that corrosion resistance increases. Ni may be included as the balance excluding 10 wt% to 90 wt% of Fe based on 100 wt% of the current collector 11, specifically in an amount of 90 wt% to 10 wt%. For example, when Fe is 10 wt%, Ni may be 90 wt%.

When the Ni content is excessive, there is a problem in that cell instability increases and reproducibility is not good. When the Ni content is insufficient, there is a problem in that the effect of corrosion resistance of Ni is insignificant.

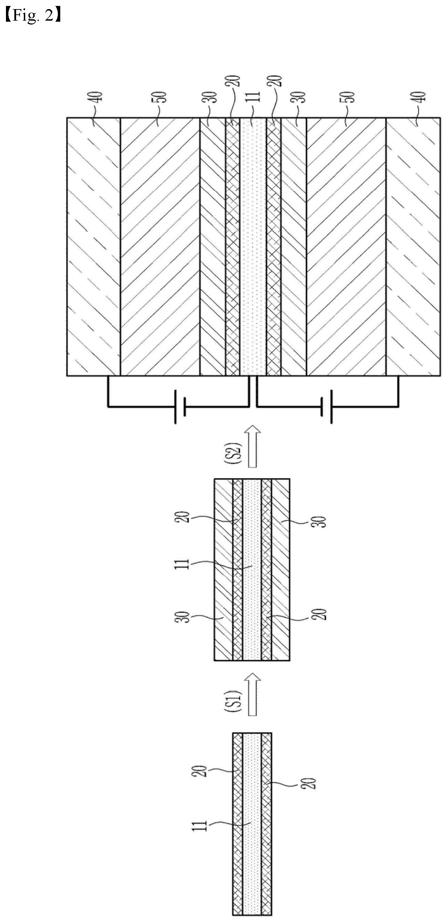

The metal layer 12 may be positioned on the current collector 11, and may include a lithium alloy layer 21 including a lithium alloy and a lithium metal layer 41 positioned on the lithium alloy layer 21. The lithium alloy layer 21 may be a layer including a lithium alloy in which a lithiophilic component included in the metal layer 12 on the current collector 11 and lithium precipitated from a lithium supply source 40 of FIG. 2 are alloyed by applying a current between the current collector 11 and the lithium supply source 40.

When an electrodeposition process is performed by applying a high current in order to increase a lithium electrodeposition rate for forming the metal layer 12, there is a problem in that performance of a lithium secondary battery deteriorates. However, when the metal layer 12 is formed in a structure including the lithium alloy layer 21 containing a lithium component as in the present embodiment, excessive generation of fine lithium particles or destruction of the protective layer 30 in the electrodeposition process can be prevented even if the electrodeposition process is performed by applying a high current.

Specifically, since the metal layer 12 of an embodiment includes the lithium alloy layer 21 containing a lithium component, when the lithium metal layer 41 is formed on the lithium alloy layer 21 by applying a high current in the electrodeposition process, initially generated lithium particles may be induced to grow well, thereby forming particles having a coarse structure, and at the same time the lithium metal layer 41, and consequently the metal layer 12, may have a uniform surface.

Accordingly, performance of a secondary battery to which the lithium metal electrode according to the present embodiment is applied, specifically charge/discharge characteristics, can be remarkably improved. In addition, since a lithium metal electrode for a secondary battery having high performance can be manufactured even when an electrodeposition process is performed at a high rate by applying a high current, productivity of the lithium metal electrode for a secondary battery can also be remarkably improved.

In the present embodiment, the lithium alloy layer 21 includes a lithiophilic metal. When the lithium alloy layer 21 includes the lithiophilic metal as described above, diffusion of lithium ions is facilitated due to a decrease in surface energy of lithium ions on a surface of the lithiophilic metal. Accordingly, there is an advantage in that lithium ion conductivity is improved and electrodeposition of the lithium metal layer is uniformly performed. The metal layer 12 serves to help lithium be more effectively precipitated under the protective layer 30 during a charging process of a battery.

In an embodiment, a lithiophilic metal layer may be further included between the lithium alloy layer 21 and the current collector 11. Specifically, a portion of the lithiophilic metal may form an alloy with lithium in the lithium alloy layer 21, and another portion thereof may remain on a surface of the current collector. Specifically, in an embodiment, a molar ratio of the lithiophilic metal may increase toward the current collector. This is because a portion of the lithiophilic metal coated on the current collector forms an alloy with lithium during an electroplating process to form the lithium alloy layer 21, and a remaining portion of the lithiophilic metal remains on the current collector.

The lithium alloy layer 21 may be an alloy of lithium and a lithiophilic metal, wherein the lithiophilic metal may include at least one of gold (Au), silver (Ag), platinum (Pt), zinc (Zn), silicon (Si), magnesium (Mg), and tin (Sn). Specifically, the lithiophilic metal may include tin (Sn). Specifically, since the lithiophilic metal includes tin, it is advantageous for application to the current collector 11 including Fe and Ni, and it is possible to implement a stable lithium metal battery having a long lifespan by preventing lithium dendrite growth.

In an embodiment, a thickness of the metal layer including the lithiophilic metal may be 20 nm to 300 nm. Specifically, the metal layer including the lithiophilic metal may be the lithium alloy layer 21. The thickness of the metal layer including the lithiophilic metal may be 25 nm to 200 nm, specifically 50 nm to 150 nm.

When the thickness is outside the upper limit of the above-described range, there is a problem in that thickness uniformity decreases. When the thickness is outside the lower limit of the above-described range, there is a problem in that cell driving characteristics are disadvantageous.

In an embodiment, a thickness standard deviation of the metal layer including the lithiophilic metal may be 90 nm or less. Specifically, a thickness standard deviation of the metal layer including the lithiophilic metal, for example, the lithium alloy layer 21, may be 90 nm or less, specifically 10 nm to 90 nm, specifically 12.5 nm to 87.1 nm, more specifically 45 nm to 65 nm, and still more specifically 50 nm to 55 nm.

The thickness standard deviation of the metal layer including the lithiophilic metal means a value measured by extracting a plurality of random portions of a sample and using a cross-section polishing (CP) and focused ion beam (FIB) method, and, as the thickness standard deviation satisfies the above-described range, there is an advantage in that uniformity satisfies a certain range condition, and thus lithium dendrite growth can be effectively prevented. When the thickness standard deviation of the metal layer including the lithiophilic metal is outside the upper limit of the above-described range, there is a problem in that it is disadvantageous for suppressing lithium dendrite growth because uniformity of the metal layer greatly differs.

In an embodiment, the metal layer 12 may have a thickness of 1 µm to 100 µm, and more specifically 5 µm to 30 µm. When the metal layer 12 is excessively thick, when the lithium metal electrode of the present embodiment is applied to a secondary battery, there is a problem in that the weight and volume of the battery increase and energy density decreases. In addition, since time and cost of an electrodeposition process increase in proportion to thickness when forming the metal layer 12, the thickness of the metal layer 12 is preferably 100 µm or less.

When the metal layer 12 is excessively thin, when the lithium metal electrode of the present embodiment is applied to a secondary battery, there is a problem in that charge/discharge lifespan of the battery deteriorates. Specifically, during charging and discharging of the battery, lithium ions move between the negative electrode and the positive electrode. When a sufficient amount of lithiophilic metal is distributed in the negative electrode, even when charging and discharging of the battery are repeated, a force by which the lithiophilic metal attracts lithium ions is maintained, enabling stable behavior. Thus, when an excessively small amount of lithiophilic metal is present, charge/discharge lifespan of the battery deteriorates.

The protective layer 30 may be positioned on the metal layer 12 and may include amorphous carbon. When only lithium metal is used as a negative electrode in an all-solid-state battery, high resistance is generated by a reaction between the all-solid-state electrolyte and lithium, and lithium dendrites are continuously generated or high-resistance lithium by-products are generated due to local non-uniformity of current density during charging and discharging, whereby failure occurs due to a short circuit or overvoltage during charging and discharging, or battery capacity deteriorates.

The lithium metal electrode according to an embodiment includes a protective layer including amorphous carbon, thereby improving not only output characteristics and lifespan characteristics of the lithium metal electrode but also structural stability.

Specifically, by including the protective layer 30 including amorphous carbon, the lithium metal electrode of the present embodiment may serve not only to improve ionic conductivity, but also to improve strength of the protective layer 30 and physically block dendrites during dendrite growth in the lithium electrode, thereby preventing a short circuit between electrodes and improving charge/discharge lifespan.

The amorphous carbon may be one or more selected from the group consisting of acetylene black, Super P black, carbon black, Denka black, activated carbon, graphite, hard carbon, and soft carbon, but is not limited thereto.

In an embodiment, the protective layer 30 may include a binder. The binder may be an aqueous binder, and the aqueous binder may be one or more selected from the group consisting of rubber-based binders selected from acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

Here, the binder may be added in an amount of 1 part by weight to 15 parts by weight, and specifically 3 parts by weight to 10 parts by weight, based on the weight of a slurry formed by mixing the amorphous carbon and water. When the content of the binder satisfies the above range, particles constituting the protective layer can be effectively bound to form a protective layer having excellent performance without causing deterioration of battery energy density due to an increase in weight and volume, thereby further improving lifespan characteristics of the secondary battery.

When the content of the binder is excessively smaller than the above range, there is a problem in that binding force between particles is reduced in forming the protective layer, and when the content of the binder is excessively greater than the above range, not only does energy density decrease, but also resistance of the protective layer greatly increases, thereby hindering lithium ion conduction.

In an embodiment, the protective layer 30 may have a thickness of 0.01 µm to 50 µm. Specifically, the protective layer 30 may have a thickness of 1 µm to 20 µm. When the thickness of the protective layer satisfies the above range, formation of lithium dendrites on the surface of the protective layer can be prevented, and lithium ions can pass through and be conducted well inside the protective layer, whereby lithium can be precipitated on a lower surface of the protective layer.

When the thickness of the protective layer is excessively small, there is a problem in that the protective layer cannot function as a protective layer. When the thickness of the protective layer is excessively large, there are problems in that resistance of the protective layer becomes too high, which may cause an increase in overvoltage during operation of a secondary battery, and battery energy density decreases due to increases in weight and volume. However, the thickness of the protective layer may be variably adjusted according to design of the secondary battery structure.

In an embodiment, the lithium metal electrode may further include a coating layer disposed in at least a partial region inside the protective layer 30, between the metal layer 12 and the protective layer 30, and/or on the protective layer 30. Specifically, the coating layer may be disposed in at least a partial region inside the protective layer 30, may be disposed between the metal layer 12 and the protective layer 30, may be simultaneously disposed inside the protective layer 30 and between the metal layer 12 and the protective layer 30, or may be disposed on the protective layer 30.

The coating layer is formed by a reaction between electrodeposited lithium metal of the lithium supply source 40 and a plating solution during manufacture of the metal layer 12, and the thickness, composition, properties, and the like of the coating layer can be controlled by controlling the composition of the plating solution used and conditions of the electrodeposition process.

In an embodiment, the coating layer may include at least a portion of LiF. LiF may be formed by including, as at least one solvent among a plurality of solvents used in the electrodeposition process, a solvent having a high dielectric constant. Specifically, by increasing salt decomposition dissociation of the solvent of the plating solution for electrodeposition, a salt decomposition reaction is suppressed and a solvent decomposition reaction is promoted during electrodeposition, whereby a sufficient LiF coating layer may be formed inside and/or on the surface of the protective layer. By including the coating layer including at least a portion of LiF, lifespan can be improved and dendrite growth can be prevented due to high ionic conductivity during battery operation.

The coating layer may have a thickness of 2 nm to 2 µm. Specifically, the coating layer may have a thickness of 10 nm to 500 nm. When the thickness of the coating layer is excessively large, lithium ion conductivity decreases and interfacial resistance increases, thereby deteriorating charge/discharge characteristics when applied to a battery. When the thickness of the coating layer is excessively small, the coating layer may be easily lost in the process of applying the lithium metal electrode according to the embodiment to a battery. Accordingly, the coating layer may have a small thickness within the above thickness range and may be uniformly and densely formed over the entire surface of the metal layer 12 or the protective layer 30.

Referring to FIG. 1B, in an embodiment, the lithium metal electrode 100 includes the current collector 11 and the metal layer 12 positioned on at least one surface of the current collector 11 and configured by mixing lithium and a lithium alloy. Here, the lithium alloy may be formed by alloying a lithiophilic component included in the metal layer 12 formed on the current collector 11 and lithium precipitated from the lithium supply source 40 by applying a current between the current collector 11 and the lithium supply source 40.

The metal layer 12 may include a lithiophilic metal. Here, the lithiophilic metal may include tin, and a detailed description thereof may refer to FIG. 1A.

In an embodiment, the metal layer 12 includes a lithiophilic metal. When the metal layer 12 including a lithiophilic metal is formed as described above, free energy of nucleation can be lowered in an early stage of nucleation of lithium particles in the electrodeposition process, and thus a lithium metal layer having a coarse particle structure can be formed even under high-current and overvoltage conditions.

In an embodiment, a thickness of the metal layer 12 including tin may be 20 nm to 300 nm. A detailed description thereof is the same as that described with reference to FIG. 1A within a range not inconsistent therewith.

In an embodiment, the metal layer 12 includes the protective layer 30 positioned on a surface of the metal layer 12, and may further include a coating layer inside and/or on a surface of the protective layer 30. Detailed descriptions of the protective layer 30 and the coating layer may refer to the description provided above with reference to FIG. 1A.

FIG. 2 is a schematic view of a method for manufacturing a lithium metal electrode of the present invention.

Referring to FIG. 2, a method for manufacturing a lithium metal electrode according to an embodiment includes preparing a current collector 11, forming a coating layer 20 on at least one surface of the current collector 11 using a coating composition including a lithiophilic component, forming a protective layer 30 on a surface of the coating layer 20 using a slurry including amorphous carbon, placing the current collector 11 on which the coating layer 20 and the protective layer 30 are formed in a plating solution 50 and then placing a lithium supply source 40 at a predetermined distance from the protective layer 30, and applying a current between the current collector 11 and the lithium supply source 40 to form a metal layer including a lithium alloy in which the lithiophilic component included in the coating layer and lithium precipitated from the lithium supply source 40 are alloyed.

The step of preparing the current collector 11 may be a step of preparing a current collector including Fe and Ni. The step of preparing the current collector including Fe and Ni may include, based on 100 wt% of an alloy in the current collector, 10 wt% to 90 wt% of Fe and the balance of Ni. Specifically, the current collector including Fe and Ni may include, based on 100 wt% of the alloy in the current collector, 55 wt% to 70 wt% of Fe and the balance of Ni. Detailed descriptions of Fe and Ni are the same as described above with reference to FIGS. 1A and 1B within a range not inconsistent therewith.

Since the contents of Fe and Ni in the current collector 11 satisfy the above-described ranges, there is an advantage in that not only corrosion resistance of the current collector increases but also most reproducibility problems can be solved. When the Fe content is outside the upper limit or the lower limit of the above-described range, there is a problem in that reactivity between the current collector and an electrolyte increases. When the Ni content is excessive, there is a problem in that cell instability increases and reproducibility is not good. When the Ni content is insufficient, there is a problem in that the effect of corrosion resistance of Ni is insignificant.

The step of forming the coating layer 20 on at least one surface of the current collector 11 using the coating composition including the lithiophilic component may coat a lithiophilic metal, which is an alloy material, on at least one surface of the current collector. The lithiophilic metal may include at least one of gold (Au), silver (Ag), platinum (Pt), zinc (Zn), silicon (Si), magnesium (Mg), and tin (Sn), as described above with reference to FIGS. 1A and 1B, and specifically may include tin (Sn).

The coating layer 20 may be such that, after undergoing a process to be described below, the lithiophilic metal forms an alloy with lithium to form the lithium alloy layer 21 as described above with reference to FIGS. 1A and 1B. In an embodiment, the coating layer 20 may be specifically disposed between the current collector 11 and the protective layer 30, and thereafter, the lithium alloy layer 21 may be formed through electroplating.

In an embodiment, the step of forming the coating layer 20 on at least one surface of the current collector 11 using the coating composition including the lithiophilic component may control a thickness of the coating layer to a range of 20 nm to 300 nm. Specifically, the thickness of the coating layer may be 25 nm to 200 nm, and specifically 50 nm to 150 nm.

In an embodiment, the step of forming the coating layer 20 on at least one surface of the current collector 11 using the coating composition including the lithiophilic component may control a thickness standard deviation of the coating layer to 90 nm or less. Specifically, the thickness standard deviation of the coating layer may be 12.5 nm to 87.1 nm, more specifically 45 nm to 65 nm, and still more specifically 50 nm to 55 nm.

In an embodiment, the step of forming the coating layer 20 may be performed using at least one method of electroplating, electroless plating, sputtering, electron beam deposition, and thermal vapor deposition. For example, the step of forming the coating layer may be performed by an electroplating method.

The protective layer 30 may be formed on a surface of the coating layer 20 using a slurry including amorphous carbon. The protective layer 30 may be formed by applying a slurry formed by mixing the amorphous carbon and a binder in water using at least one method among a doctor blade method, a dip method, a reverse roll method, a direct roll method, a gravure method, an extrusion method, and a brush coating method. The protective layer 30 may further include a binder.

Meanwhile, in the step of forming the protective layer 30, the thickness of the protective layer formed on the surface of the alloy material coating layer may be 0.01 µm to 50 µm, and more specifically 1 µm to 20 µm.

When the thickness is outside the upper limit of the above-described range, there is a problem of top-surface electrodeposition in which lithium is electrodeposited on the protective layer. When the thickness is outside the lower limit of the above-described range, there is a problem in that cell driving characteristics are disadvantageous.

After the step of forming the protective layer 30, a step of placing the current collector on which the coating layer 20 and the protective layer 30 are sequentially formed in the plating solution 50 and then placing the lithium supply source 40 at a predetermined distance from the current collector 11, and a step of applying a current between the current collector 11 and the lithium supply source 40 to form the metal layer 12 are performed.

Specifically, after the current collector 11 on which the coating layer 20 and the protective layer 30 are formed is placed in the plating solution, the lithium supply source 40 is placed at a predetermined distance from the protective layer 30. The lithium supply source 40 may be, for example, lithium metal, a lithium alloy, a foil in which the lithium metal or lithium alloy is pressed onto a current collector, a plating solution in which a lithium salt is dissolved, or the like.

The plating solution 50 may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution 50 is characterized by including a nitrogen-based compound as at least one of the lithium salt and the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as a lithium salt.

Among the nitrogen-based compounds, at least one of ε-caprolactam, N-methyl-ε-caprolactam, triethylamine, and tributylamine may be used as a non-aqueous solvent.

The plating solution 30 may be prepared using only the nitrogen-based compound, but may include a general non-aqueous solvent as an auxiliary solvent in consideration of viscosity and the like of the plating solution 30.

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In an embodiment, the auxiliary solvent may be included in an amount of 5 wt% to 70 wt%, preferably 10 wt% to 60 wt%, based on 100 wt% of the entire plating solution 50, but is not limited thereto. However, when the auxiliary solvent is included within the above range, the viscosity of the plating solution 50 is appropriate, and thus the time required for the process of forming the lithium metal layer 12 can be shortened, but the present invention is not limited thereto.

In an embodiment, the plating solution 50 may further include a fluorine-based compound. When the plating solution 50 further includes the fluorine-based compound, there is an advantage in that properties of the coating layer formed on the lithium metal layer 12 can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution 50. When the fluorine-based compound is included within the above range, the nitrogen-based compound and the fluorine-based compound in the plating solution 50 smoothly interact with each other, and thus there is an advantage in that the effect of improving properties of the coating layer formed on the lithium metal layer 12 is excellent. In addition, excessive generation of LiF by direct reaction between the fluorine-based compound and lithium is suppressed, which is advantageous in that electrochemical properties are excellent.

Next, after an insulating film is positioned between the current collector 11 and the lithium supply source 40, the current collector 11, the lithium supply source 40, and the insulating film may be stacked and constrained in both directions using a constraining device. As non-limiting examples of the constraining device, a method generally used in the art, such as a manual clamping method or a uniaxial pressing method using hydraulic pressure or pneumatic pressure, may be used.

In the step of applying a current to form the lithium metal layer 12 on at least one surface of the current collector 11, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically 0.25 hours to 25 hours.

In an embodiment, the step of applying the current to form the lithium metal layer 12 on at least one surface of the current collector 11 may be performed at least once at different current densities. The step of applying the current may be performed in multiple stages. Specifically, the step of applying the current in multiple stages may be performed by increasing the current density stepwise from a low current density to a high current density for predetermined times. For example, the step of applying the current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the step of applying the current to form the lithium metal layer 12 on at least one surface of the current collector 11 may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can be precipitated between the protective layer 30 and the current collector 11.

The step of electrodepositing at the maximum current density may be, for example, a step finally performed after a step of precipitating in multiple stages in order to precipitate lithium between the current collector 11 and the protective layer 30. When the maximum current density satisfies the above range, lithium is appropriately precipitated between the current collector 11 and the protective layer 30, and there are advantages in that lifespan characteristics of the battery and bonding strength between the current collector 11 and the protective layer 30 are excellent.

When the maximum current density is outside the upper limit of the above range, since lithium is precipitated on the surface of the protective layer 30, there is a problem in that a targeted stabilized electrode structure cannot be secured. When the maximum current density is outside the lower limit of the above range, there is a problem of reduced productivity because the time for electrodepositing lithium increases.

In an embodiment, the step of applying the current to form the lithium metal layer on at least one surface of the current collector 11 may include electrodepositing precipitated lithium to a thickness in a range of 3 µm to 15 µm. Specifically, the precipitated lithium may be electrodeposited to a thickness in a range of 5 µm to 12 µm. The thickness of the precipitated lithium may mean a height in a vertical direction of lithium disposed between the current collector 11 and the protective layer 30.

When the thickness of the precipitated lithium is outside the upper limit of the above thickness range, not only does energy density of the battery decrease, but also process time and the amount of metal raw materials used increase when forming the metal layer. When the thickness of the precipitated lithium is outside the lower limit of the above thickness range, there is a problem in that initial Coulombic efficiency is reduced due to initial irreversibility and charge/discharge performance deteriorates because surplus lithium is insufficient.

In an embodiment, in the step of applying the current to form the lithium metal layer 12 on at least one surface of the current collector 11, the thickness of the metal layer 12 including the lithium alloy may be controlled to 1 µm to 100 µm. Detailed descriptions of the thickness of the metal layer 12 may refer to the above description of FIG. 1.

As described above, in the present embodiment, a lithium metal electrode 100 having a metal layer including the lithium metal layer 12 having a coarse particle structure can be manufactured under high-current conditions by preventing excessive generation of fine lithium particles and inducing initially generated lithium particles to grow well. In addition, the metal layer thus manufactured has excellent surface uniformity.

A lithium secondary battery according to another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. The electrode assembly may be wound or folded and accommodated in a battery case.

Thereafter, an electrolyte may be injected into the battery case and sealed to complete a secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, an aluminum foil, a nickel foil, or a combination thereof may be used, but is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be, for example, selected from glass fibers, polyester, polyethylene, polypropylene, polytetrafluoroethylene, or combinations thereof, and may be in the form of a nonwoven fabric or a woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Preparation of Current Collector>

An Fe-Ni-based current collector 11 was prepared by rolling or an electrolytic method. At this time, the Fe-Ni-based current collector 11 was prepared by controlling Fe to 90 wt% and Ni to 10 wt% based on 100 wt% of an alloy of Fe and Ni.

### <Formation of Coating Layer>

Thereafter, a coating layer 20 was formed on both surfaces of the prepared current collector by an electroplating method. At this time, tin (Sn) was used as the coating layer, and the plating thickness was controlled to about 100 nm.

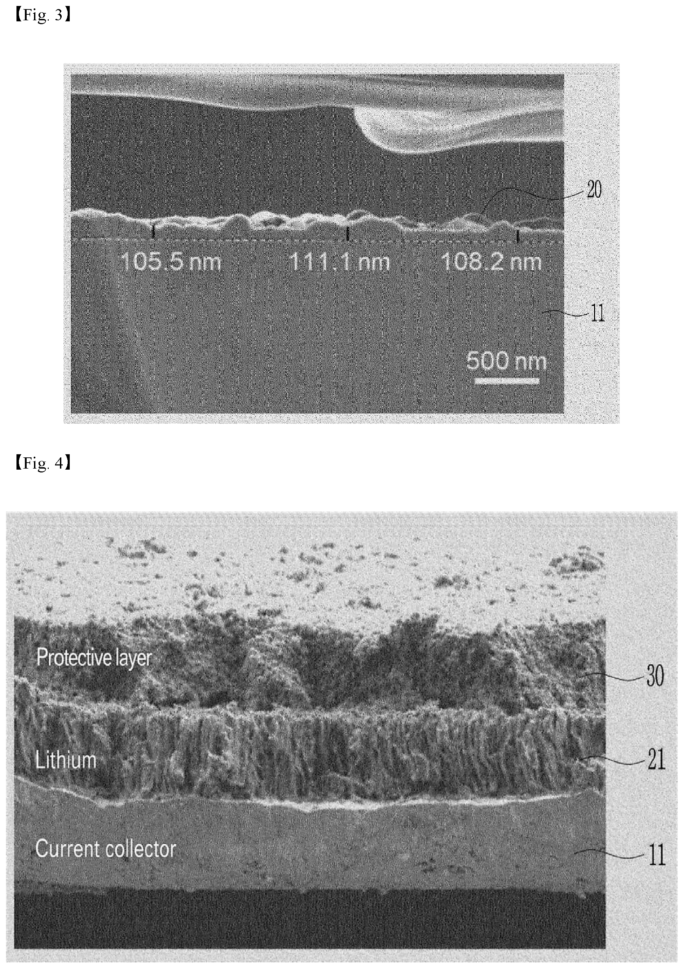

FIG. 3 is a scanning electron microscope (SEM) photograph showing a structure and thickness of the coating layer 20 plated on the current collector 11 according to an embodiment of the present invention.

Referring to FIG. 3, it can be confirmed that the coating layer 20 plated on the current collector 11 of the present invention has a thickness of about 100 nm and a thickness standard deviation of 48.5 nm.

### <Formation of Protective Layer>

Thereafter, a protective layer 30 having a thickness of about 5 µm was formed on the upper surface of the coating layer 20 by slurry coating using a comma coater. Specifically, the protective layer 30 was formed by mixing acetylene black, which is amorphous carbon, and a binder. At this time, the binder was prepared by adding carboxymethyl cellulose (CMC) and styrene-butadiene rubber (SBR) in amounts of 3.0 wt% each.

### <Lithium Electrodeposition Process>

Thereafter, in order to form a lithium alloy or pure lithium metal between the protective layer 30 and the current collector 11, an electrodeposition process was used to remove lithium from the lithium supply source 40 and precipitate the lithium between the protective layer 30 and the current collector 11. The plating solution 50 used for such electrodeposition was prepared by adding, as a nitrogen-based compound, lithium bis(fluorosulfonyl)imide and lithium nitrate in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution, to a mixed solvent in which 1,2-dimethoxyethane (DME) as a first solvent and sulfolane (SL) as a second solvent were mixed at a molar ratio of 90:10. As the lithium supply source 40, a lithium metal plate having a purity of 99.9% or more and a thickness of 500 µm was pressed onto a copper current collector plate (Cu plate) and used.

After the lithium supply source 40 and the current collector 11 were stacked in the plating solution 50 in an electrically insulated state, a current was applied using a power supply in a manner in which the lithium supply source 40 and the current collector 11 were used as (+) and (-) electrodes, respectively, to precipitate lithium between the current collector 11 and the protective layer 30.

The current density of the electrodeposition process was increased stepwise in the order of 0.2 mA/cm², 0.5 mA/cm², and 1 mA/cm², electrodeposition was performed for 5 minutes at each current density, and then the maximum current density was set to 10 mA/cm². The electrodeposition time at the maximum current density was variably set according to the magnitude of the maximum current density by calculating a time at which a final cumulative lithium thickness of 10 µm could be electrodeposited.

FIG. 4 shows a cross-sectional structure when lithium is precipitated between the protective layer 30 and the current collector 11 by an electrodeposition process according to an embodiment.

Referring to FIG. 4, it can be confirmed that lithium was precipitated between the protective layer 30 and the current collector 11 by the above-described electrodeposition process. The maximum current density means a limit of current density at which lithium electrodeposited in the electrodeposition process can be precipitated between the protective layer 30 and the current collector 11, and at a current density higher than the maximum current density value, lithium is precipitated on the surface of the protective layer 30, and thus the targeted structure cannot be confirmed.

### <Comparative Example 1>

A lithium metal electrode was manufactured in the same manner as in Example 1, except that, in the step of forming the current collector, Fe was not included at all and only Ni was included in an amount of 100 wt%.

### <Comparative Example 2>

A lithium metal electrode was manufactured in the same manner as in Example 1, except that, in the step of forming the current collector, Ni was not included at all and only Fe was included in an amount of 100 wt%, and the maximum electrodepositable current was 4 mA/cm².

### Manufacture of All-Solid-State Battery

All-solid-state batteries were manufactured by applying the negative electrodes manufactured according to the above-described Examples and Comparative Examples, and charge/discharge lifespan was evaluated. For evaluation of the all-solid-state battery cells, a pressurized dedicated evaluation cell manufactured by Terra Leader, capable of maintaining an inert atmosphere, was used. For manufacture of the all-solid-state battery cells, a sulfide-based argyrodite (Li₆PS₅Cl) solid electrolyte was used as an electrolyte, and the electrolyte was formed into a pellet having a thickness of about 0.7 mm. In order to secure a dense electrolyte, pressure was applied at 370 MPa.

Lithium having a thickness of 0.5 mm was attached to one surface of the electrolyte as a reference electrode, and the negative electrodes manufactured according to the Examples and Comparative Examples were attached to the opposite surface. The reference electrode and the evaluation electrode were pressed at a pressure of 50 MPa.

Lithium having a thickness of 0.5 mm was attached to one surface of the electrolyte as a reference electrode, and the negative electrodes manufactured according to the Examples and Comparative Examples were attached to the opposite surface.

### <Evaluation Example 1>: Control of Fe-Ni Content in Current Collector

Table 1 below shows the maximum electrodeposition current and the number of charge/discharge performance cycles when the content ratio of Fe and Ni in the current collector was varied. The coating layer thickness standard deviation, maximum electrodeposition current, and number of charge/discharge performance cycles were measured by the following methods.

Coating layer thickness standard deviation (nm): A plurality of random portions of a sample were extracted and measured by a cross-section polishing (CP) and focused ion beam (FIB) method.

Maximum current density (mA/cm²): The maximum current density means a limit of current density at which lithium electrodeposited according to the above process can be precipitated between the protective layer and the current collector, and the maximum current density was measured.

Number of charge/discharge performance cycles (cycles): The reference electrode and the evaluation electrode were attached to the solid electrolyte at a pressure of 50 MPa, and pressure was applied at 16 MPa in the dedicated evaluation cell during charge/discharge evaluation. The charge/discharge evaluation was performed by defining, as one cycle, charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging or when a voltage between the two electrodes exceeded 2 V.

**[Table 1]**

| Classification | Current Collector Alloy Content | | Coating Layer | | Maximum Electrodeposition Current [mA/cm²] | Number of Charge/Discharge Performance Cycles [cycles] |
|---|---|---|---|---|---|---|
| | Fe [wt%] | Ni [wt%] | Sn Thickness [nm] | Sn Thickness Standard Deviation [nm] | | |
| Example 1 | 90 | 10 | 100 | 48.5 | 10 | 637 |
| Comparative Example 1 | 0 | 100 | 100 | 61.9 | 12 | 122 |
| Comparative Example 2 | 100 | 0 | 100 | 41.3 | 4 | 336 |

Referring to Table 1, it was confirmed that Example 1, which simultaneously included Fe and Ni as alloy components in the current collector, had a high number of charge/discharge performance cycles. In contrast, it was confirmed that Comparative Example 1 and Comparative Example 2, which included only Fe or only Ni as an alloy component in the current collector, had a low number of charge/discharge performance cycles.

### <Evaluation Example 2> - Control of Fe:Ni Content

### <Example 2>

A lithium metal electrode and an all-solid-state battery were manufactured in the same manner as in Example 1, except that the weight percentages of Fe:Ni were changed to 64 wt%:36 wt% in the step of forming the current collector, and the maximum electrodepositable current was 12 mA/cm².

### <Example 3>

A lithium metal electrode and an all-solid-state battery were manufactured in the same manner as in Example 1, except that the weight percentages of Fe:Ni were changed to 10 wt%:90 wt% in the step of forming the current collector, and the maximum electrodepositable current was 12 mA/cm².

Table 2 below shows the maximum electrodeposition current and the number of charge/discharge performance cycles when the content ratio of Fe and Ni in the current collector was varied. The Sn layer thickness standard deviation, maximum electrodeposition current, and number of charge/discharge performance cycles were measured by the following methods.

**[Table 2]**

| Classification | Current Collector Alloy Content | | Coating Layer | | Maximum Electrodeposition Current [mA/cm²] | Number of Charge/Discharge Performance Cycles [cycles] |
|---|---|---|---|---|---|---|
| | Fe [wt%] | Ni [wt%] | Sn Thickness [nm] | Sn Thickness Standard Deviation [nm] | | |
| Example 1 | 90 | 10 | 100 | 48.5 | 10 | 637 |
| Comparative Example 1 | 64 | 36 | 100 | 52.1 | 12 | 712 |
| Comparative Example 2 | 10 | 90 | 100 | 59.4 | 12 | 705 |

Referring to Table 2, it was confirmed that when both Fe and Ni were included in the current collector as in Examples 1 to 3, the number of charge/discharge performance cycles was excellent. At this time, when Examples 1 and 3 were compared with Example 2, it was confirmed that the number of charge/discharge performance cycles of Example 2 was more excellent.

### <Evaluation Example 3> - Control of Coating Layer Thickness

### <Example 4>

A lithium metal electrode and an all-solid-state battery were manufactured in the same manner as in Example 2, except that the thickness of the coating layer was controlled to 25 nm in the step of forming the coating layer.

### <Example 5>

A lithium metal electrode and an all-solid-state battery were manufactured in the same manner as in Example 2, except that the thickness of the Sn layer was controlled to 200 nm in the step of forming the coating layer, and the maximum electrodeposition current was controlled to 8 mA/cm².

### <Comparative Example 3>

A lithium metal electrode and an all-solid-state battery were manufactured in the same manner as in Example 2, except that the thickness of the Sn layer was controlled to 500 nm in the step of forming the coating layer, and the maximum electrodeposition current was controlled to 6 mA/cm².

### <Comparative Example 4>

A lithium metal electrode and an all-solid-state battery were manufactured in the same manner as in Example 2, except that the thickness of the Sn layer was controlled to 10 nm in the step of forming the coating layer, and the maximum electrodeposition current was controlled to 6 mA/cm².

### <Comparative Example 5>

A lithium metal electrode and an all-solid-state battery were manufactured in the same manner as in Example 2, except that the thickness of the Sn layer was controlled to 0 nm in the step of forming the coating layer.

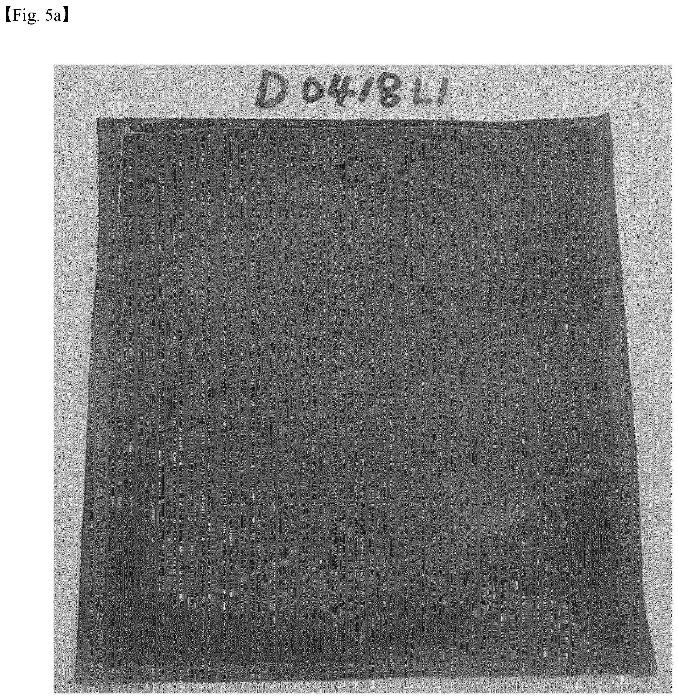

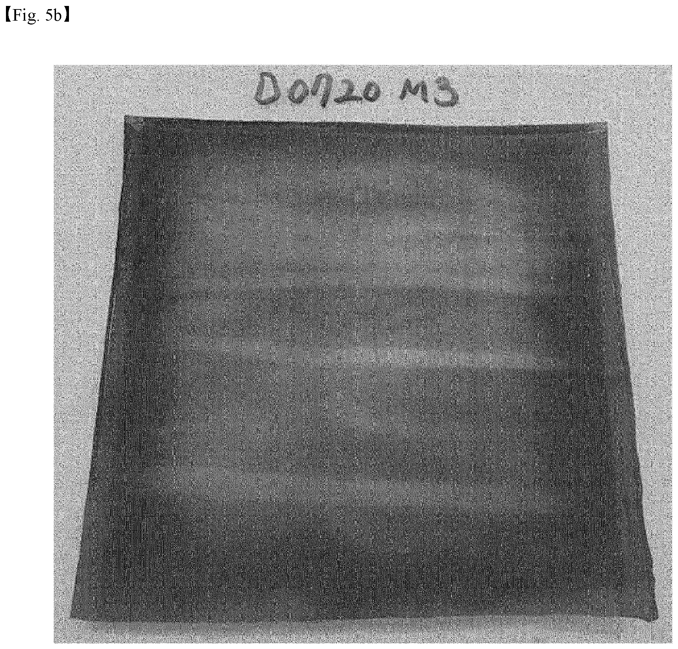

FIGS. 5A and 5B show appearances when lithium is electrodeposited according to Examples and Comparative Examples of the present invention.

FIGS. 5A and 5B show electrodeposition appearances of Example 2 and Comparative Example 4, respectively, when electrodeposition was performed at 12 mA/cm². Specifically, the drawings show the appearance when lithium is precipitated between the current collector and the protective layer when electrodeposition is performed at the maximum current density, and the appearance when electrodeposition is performed at a current density exceeding the maximum current density. When electrodeposition is performed at or below the maximum electrodepositable current density, precipitated lithium is stacked under the black protective layer, and thus the black protective layer is observed in appearance. When electrodeposition is performed at a current density exceeding the maximum electrodepositable current density, it was confirmed that lithium was stacked on the upper surface of the protective layer, and grayish lithium was electrodeposited on the upper surface of the protective layer.

Table 3 below shows the maximum electrodeposition current and the number of charge/discharge performance cycles when the thickness of the coating layer on the current collector was varied. The coating layer thickness standard deviation, maximum electrodeposition current, and number of charge/discharge performance cycles were measured by the following methods.

**[Table 3]**

| Classification | Current Collector Alloy Content | | Coating Layer | | Maximum Electrodeposition Current [mA/cm²] | Number of Charge/Discharge Performance Cycles [cycles] |
|---|---|---|---|---|---|---|
| | Fe [wt%] | Ni [wt%] | Sn Thickness [nm] | Sn Thickness Standard Deviation [nm] | | |
| Example 2 | 64 | 36 | 100 | 52.1 | 12 | 712 |
| Example 4 | 64 | 36 | 25 | 59.4 | 12 | 694 |
| Example 5 | 64 | 36 | 200 | 14.7 | 8 | 682 |
| Comparative Example 3 | 64 | 36 | 500 | 87.1 | 6 | 319 |
| Comparative Example 4 | 64 | 36 | 10 | 61.9 | 4 | 401 |
| Comparative Example 5 | 64 | 36 | 0 | 0 | - | - |

Referring to Table 2, when the Sn thickness and the Sn thickness standard deviation satisfied the ranges of the present invention as in Examples 2, 4, and 5, it was confirmed that the number of charge/discharge performance cycles was excellent at 600 or more. However, when the Sn thickness was excessively thick, as in Comparative Example 3, it was confirmed that the number of charge/discharge performance cycles decreased, and when the Sn thickness was excessively thin, as in Comparative Example 4, it was confirmed that the number of charge/discharge performance cycles was good.

In addition, when the coating layer was not formed at all on the current collector as in Comparative Example 5, an experiment was performed by lowering the current density to 0.5 mA/cm² under the conditions used in Example 1 in order to measure the maximum electrodeposition current, but even at the corresponding current, a phenomenon in which lithium was precipitated on the upper surface of the protective layer was observed. As described above, it was confirmed that measurement of the maximum electrodeposition current density was difficult because lithium was electrodeposited on the upper surface of the protective layer even at a sufficiently low current density. In addition, when a cell was manufactured without the coating layer as in Comparative Example 5, it was confirmed that about 80% of the cells did not proceed with normal cycling and had a problem of internal short circuit.

In addition, referring to Table 3, it was confirmed that no difference in coating layer thickness standard deviation according to current collector composition was observed, but the Sn plating thickness tended to increase as the Sn plating thickness increased.

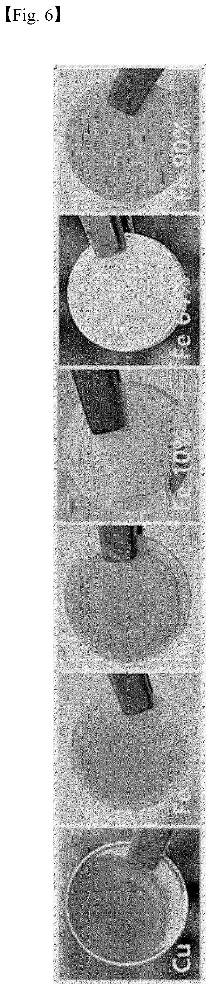

FIG. 6 is a photograph showing evaluation of corrosiveness of lithium metal batteries according to Examples and Comparative Examples of the present invention.

Referring to FIG. 6, the photograph is obtained by manufacturing all-solid-state cells using lithium metal batteries according to Examples and Comparative Examples of the present invention and a sulfide-based solid electrolyte, then disassembling the cells and observing the surface of the solid electrolyte in contact with the current collector. At this time, from the left, the photograph shows use of current collectors of Cu 100 wt%, Fe 100 wt%, Ni 100 wt%, Fe 10 wt% and Ni 90 wt%, Fe 64 wt% and Ni 36 wt%, and Fe 90 wt% and Ni 10 wt%.

Referring to FIG. 6, it can be confirmed that when Cu, Fe, or Ni is used alone for the current collector, corrosion is severe. In contrast, it was confirmed that the current collector simultaneously including Fe and Ni had excellent corrosion resistance compared with the case of using Cu, Fe, or Ni alone. In addition, in the current collector simultaneously including Fe and Ni, it was confirmed that corrosion resistance was most excellent when Fe was 64% and Ni was 36%.

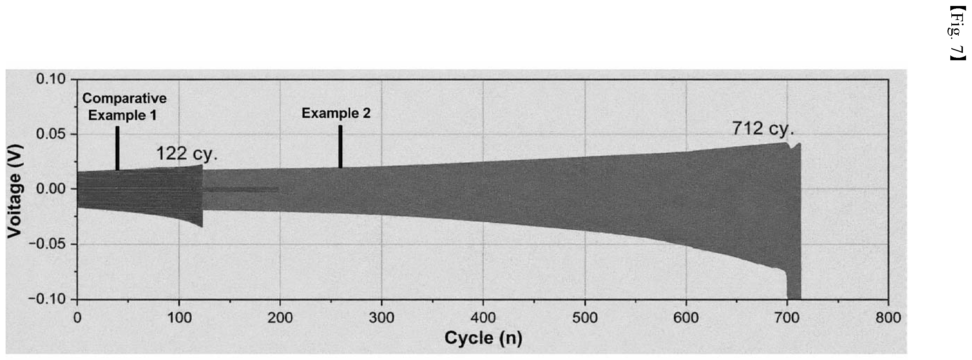

FIG. 7 shows cell lifespan evaluation of all-solid-state batteries using Examples and Comparative Examples of the present invention.

FIG. 7 shows cell lifespan evaluation of all-solid-state batteries using the lithium electrodes of Example 2 and Comparative Example 1 of the present invention. Referring to FIG. 5, it was confirmed that, when Fe and Ni as components of the alloy in the current collector were controlled within the range of the present invention, cell lifespan characteristics were excellent at 712 cycles. In contrast, when only Ni was used as an alloy component in the current collector, it was confirmed that cell lifespan characteristics were inferior at 122 cycles.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode comprising:
a current collector comprising Fe and Ni; and
a metal layer positioned on at least one surface of the current collector and comprising a lithium alloy.

2. The lithium metal electrode of claim 1, comprising:
a protective layer positioned on the metal layer.

3. The lithium metal electrode of claim 1,
wherein the current collector comprising Fe and Ni comprises, based on 100 wt% of an alloy in the current collector, 10 wt% to 90 wt% of Fe and a balance of Ni.

4. The lithium metal electrode of claim 1,
wherein the current collector comprising Fe and Ni comprises, based on 100 wt% of an alloy in the current collector, 55 wt% to 70 wt% of Fe and a balance of Ni.

5. The lithium metal electrode of claim 1,
wherein the metal layer comprises at least one lithiophilic metal among gold (Au), silver (Ag), platinum (Pt), zinc (Zn), silicon (Si), magnesium (Mg), and tin (Sn).

6. The lithium metal electrode of claim 1,
wherein a thickness of the metal layer comprising the lithiophilic metal is 20 nm to 300 nm.

7. The lithium metal electrode of claim 1,
wherein a thickness standard deviation of the metal layer comprising the lithiophilic metal is 90 nm or less.

8. The lithium metal electrode of claim 1,
wherein a molar ratio of the lithiophilic metal in the metal layer comprising the lithium alloy increases toward the current collector.

9. A method for manufacturing a lithium metal electrode, comprising:
preparing a current collector comprising Fe and Ni; and
forming a coating layer on at least one surface of the current collector using a coating composition comprising a lithiophilic component.

10. The method for manufacturing a lithium metal electrode of claim 9, further comprising, after forming the coating layer:
forming a protective layer on a surface of the coating layer;
placing the current collector on which the coating layer and the protective layer are formed in a plating solution, and then placing a lithium supply source at a predetermined distance from the protective layer; and
applying a current between the current collector and the lithium supply source to form a metal layer comprising a lithium alloy in which the lithiophilic component included in the coating layer and lithium precipitated from the lithium supply source are alloyed.

11. The method for manufacturing a lithium metal electrode of claim 9,
wherein preparing the current collector comprising Fe and Ni comprises preparing the current collector comprising, based on 100 wt% of an alloy in the current collector, 10 wt% to 90 wt% of Fe and a balance of Ni.

12. The method for manufacturing a lithium metal electrode of claim 11,
wherein the current collector comprising Fe and Ni comprises, based on 100 wt% of an alloy in the current collector, 55 wt% to 70 wt% of Fe and a balance of Ni.

13. The method for manufacturing a lithium metal electrode of claim 9,
wherein forming the coating layer on at least one surface of the current collector using the coating composition comprising the lithiophilic component comprises controlling a thickness of the coating layer to a range of 20 nm to 300 nm.

14. The method for manufacturing a lithium metal electrode of claim 9,
wherein forming the coating layer on at least one surface of the current collector using the coating composition comprising the lithiophilic component comprises controlling a thickness standard deviation of the coating layer to 10 nm to 90 nm.

15. The method for manufacturing a lithium metal electrode of claim 9,
wherein, in forming the coating layer on at least one surface of the current collector using the coating composition comprising the lithiophilic component,
the coating layer comprises at least one lithiophilic metal among gold (Au), silver (Ag), platinum (Pt), zinc (Zn), silicon (Si), magnesium (Mg), and tin (Sn).
